# EUROPEAN PATENT APPLICATION

(11) **EP 1 501 209 A1**
(43) Date of publication of application: **26.01.2005**
(21) Application number: 03291843.5
(22) Date of filing: 25.07.2003
(51) Int. Cl.: H04B 7/02

(54) **Uplink macro diversity method**

(71) Applicant: EVOLIUM S.A.S., 75008 Paris (FR)
(72) Inventor: Buné, Paul A.M., Dipl.-Ing., 70806 Kornwestheim (DE)
(74) Representative: Richardt, Markus Albert

(57) **Abstract**

The present invention relates to an uplink macro diversity method in a digital cellular mobile radio communication system, the method comprising the steps of:
- transmitting an information block from a mobile station, the information block having a number of data bits,
- receiving a first information block corresponding to the information block at the first base station and receiving a second information block corresponding to the information block at at least a second base station,
- determining a first quality measure for each data bit of the first information block by the first base station, the first quality measure representing the reliability of the data bit,
- determining a second quality measure for each data bit of the second information block by the second base station, the second quality measure representing the reliability of the data bit,
- sending the first information block and the first quality measures from the first base station to a controller and sending the second information block and the second quality measures from the second base station to the controller,
- combining the first and second information blocks based on the first and second quality measures into a third information block by the controller.

## Description

### Field of the invention.

The present invention relates generally to digital cellular mobile radio communication systems, and more particularly to an uplink macro diversity method, computer program product and apparatus in such a system.

### Background and prior art

In conventional digital cellular mobile radio communication systems a mobile station communicates with only one base station at a given time. However, it has been suggested to use so-called macro diversity in such systems.

This concept means that in the downlink direction several base stations send the same information blocks to a mobile station, which combines the sent blocks into a final received block. In the uplink direction a mobile station transmits an information block which is received at several base stations. The received blocks are transmitted to a common node in the land system, for example a mobile services switching center, where the received blocks are combined into a final received block. These procedures increase the reliability of the received information blocks, since the information has now travelled along different paths, one of which may distort the information less than the other.

US Patent No. 5,867,791 shows an uplink macro diversity method in a digital mobile radio communication system. This includes a mobile station transmitting an information block and a set of base stations receiving information blocks corresponding to the transmitted information block at each base station in the set. This communication system contains an uplink macro diversity system with a device in each base station for determining an overall quality measure representing the reliability of each respective received information block, and a decision device for choosing the received information block with the best quality measure as a common output information block of the set of base stations.

Further a macro-diversity cellular mobile radio architecture has been suggested in "Uplink performance of a new macro-diversity cellular mobile radio architecture", Papen, W., Inst. of Commun. Syst. & Data Process., Aachen Univ. of Techno).; Personal, Indoor and Mobile Radio Communications, 1995. PIMRC'95. 'Wireless: Merging onto the Information Superhighway'., Sixth IEEE International Symposium on 09/27/1995 -09/29/1995, 27-29 Sep 1995 Location: Toronto, Ont. , Canada, On page(s): 1118-, Volume: 3, 27-29 Sep 1995, INSPEC Accession Number: 5352923.

### Summary of the invention

The present invention provides for an uplink macro diversity method in a digital cellular mobile radio communication system, whereby each base station which receives an information block from a mobile station determines a quality measure for each data bit of the information block. The quality measure represents the reliability of the received data bit, i.e. the level of confidence that the data bit has been received correctly.

A controller receives the information blocks together with the respective quality measures from the various base stations and combines the information blocks into one consolidated information block based on the quality measures of the data bits. This way a higher level of accuracy of the reception is attainable.

In accordance with a preferred embodiment of the invention the controller selects the data bit from the received information blocks which has the highest quality measure. In addition the overall quality measures of the information blocks can be taken into account for this selection process. This is particularly useful if the quality measures of a given bit position are about identical but the corresponding data bits are different. In this instance the data bit of the information block having the higher overall quality measure prevails in the selection process.

In accordance with a further preferred embodiment of the invention the controller which performs the selection of data bits received from various base stations is a radio network controller. The radio network controller sends the consolidated information block to a user device.

### Brief description of the drawings

In the following preferred embodiments of the invention will be described detail by making reference to the drawings in which:
- Figure 1: is a block diagram of an embodiment of a digital cellular mobile radio communication system of the invention,
- Figure 2: is illustrative of an embodiment of the combination of information blocks received from different base stations into a consolidated information block,
- Figure 3: is illustrative of a flow chart of an embodiment of the invention.

### Detailed description

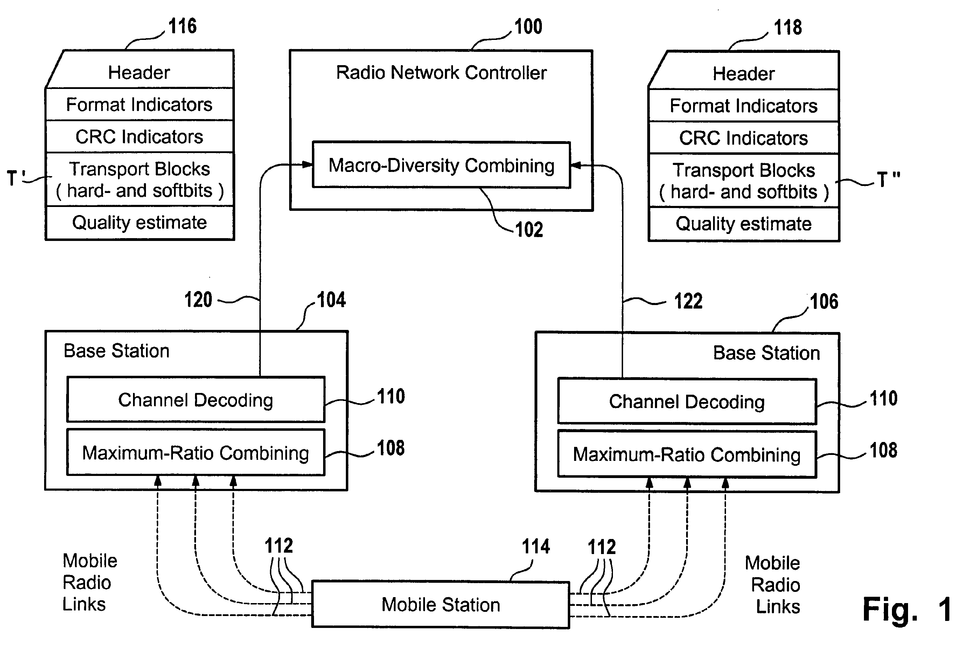

Figure 1 shows a digital cellular mobile radio communication system, such as a UMTS-type system. The digital cellular mobile radio communication system has a radio network controller (RNC) 100. The radio network controller 100 has program module 102 for macro-diversity combining of equivalent transport blocks received from various base stations which are covered by radio network controller 100. For ease of explanation but without restriction of generality it is assumed in the following that radio network controller 100 covers only two base stations, i.e. base station 104 and base station 106.

Base stations 104 and 106 have program modules 108 and 110. Program module 108 implements a maximum-ratio combination algorithm which utilises the estimated signal to interference ratio (SIR) of the separate links to a mobile station and maximises the SIR of the combined signal. After demodulation, which may possibly include despreading, the signal is channel decoded in program module 110.

In operation mobile radio links 112 are formed between mobile station 114 and base stations 104 and 106. Inside each of the base stations 104 and 106, the analogue signals picked up by the different antennas of the base stations 104 and 106 are digitally sampled by multi-level quantization. Subsequently, these signals are combined according to the maximum-ratio combination algorithm which is implemented by program modules 108. After demodulation, the signal is channel-decoded in program modules 110.

After demodulation, the signal typically comprises "soft" bits, i.e. bits which can have a variable amplitude as opposed to "hard" bits, which can have only one of two physical values, logically mapped to "0" and "1". In 3GPP UMTS as well as in GSM type systems, the positive soft bits are virtually mapped to "0", while the negative soft bits are virtually mapped to "1". The soft bits amplitudes are a measure for the estimated bit corruption in the sense that larger (positive or negative) amplitudes mean less corrupted (and thus more reliable) bits. Program modules 108 utilise this reliability information in order to improve the error correcting performance of the channel decoding.

After channel decoding, the signal comprises hard bits. Usual channel decoding types for digital mobile radio are either maximum-likelihood sequence estimation (MLSE) which is based on Viterbi decoding or Turbo decoding. With MLSE, the hard bits are inherently generated by the trace back algorithm which evaluates the path selections as stored in the trellis, while with a Turbo decoder, the soft bit output as generated by the last iteration is led through a 0-threshold detector.

In 3 GPP UMTS after channel decoding, the hard bits are collected into so-called transport blocks. The contents of these transport blocks are compared with the attached cyclic redundancy check (CRC) fields which usually have a size between 8 and 24 bits. Thereupon, the CRC field is deleted, and the information whether the CRC was "good" or "bad" is contained in a 1-bit indicator called CRC indicator (CRCl). Thereupon, the transport blocks belonging to one channels transmission timing interval (TTI) or to the TTI of one set of coordinated channels are collected into an uplink frame protocol (FP) data frame together with their corresponding CRCls and an overall quality estimate, which is based on transport channel or physical channel bit error rate (BER), cf. 3 GGP TS 25.427,para 6.2.2. The overall quality estimate (QE) is sometimes referred to a "soft information" (cf. WCDMA for UMTS "Editors H. Holma and A. Toskala, 2001, para 9.2.2).

The complete FP data frames 116 are sent via fixed links 120 and 122, respectively, to radio network controller 100. In the radio network controller 100 the FP data frames 116 and 118 are collected on a transport channel and TTI basis for combining. This is typically done by transport block selection out of one of the incoming data frames.

In accordance with the present invention an FP data frame has the following structure: a header, format indicators, CRCis, transport blocks and QE. It is important to note that the transport blocks comprise hard bits with bit-by-bit reliability indicators. In other words each hard bit contained in a transport block has an assigned reliability indicator which indicates the quality of the hard bit. Preferably the soft bits which are used by program module 110 for the channel decoding are used to generate such a bit-related quality measure.

Preferably the resolution of the bit-by-bit reliability indicators contained in an FP data frame is reduced from the original soft-bit resolution in order to limit the amount of data overhead which is transmitted over links 120 and 122. For example each reliability indicator has only a resolution of 8,4,2 or even only 1 bit position. in the latter case only a differentiation between "good" and "bad" quality of the corresponding hard bit can be made.

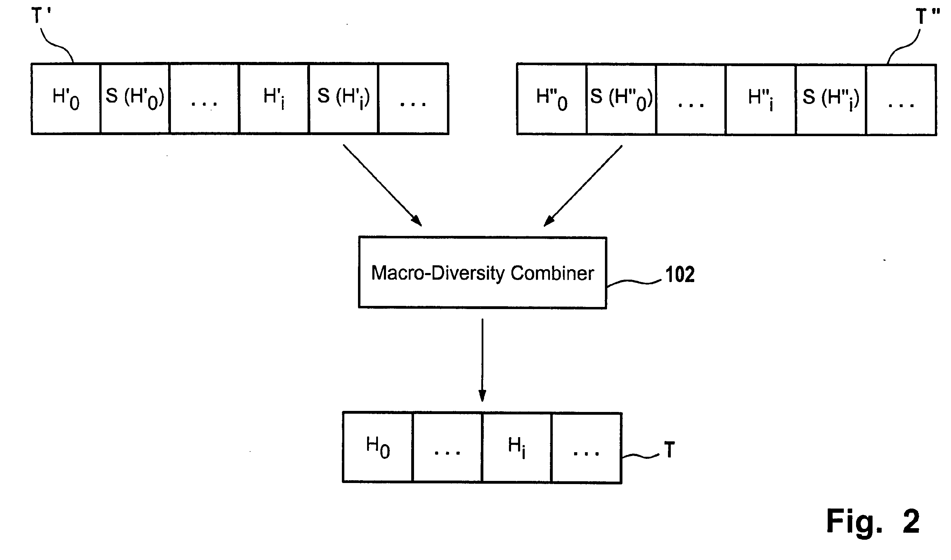

Figure 2 shows the structure of the transport blocks by way of example. Transport block T' contained in FP data frame 116 has hard bits H'₀, H'₁, ... H'ᵢ, ... Each of the hard bits has a reliability indicator S(H'ᵢ) which indicates the quality of the corresponding hard bit. Transport block T" of FP data frame 118 has the same structure.

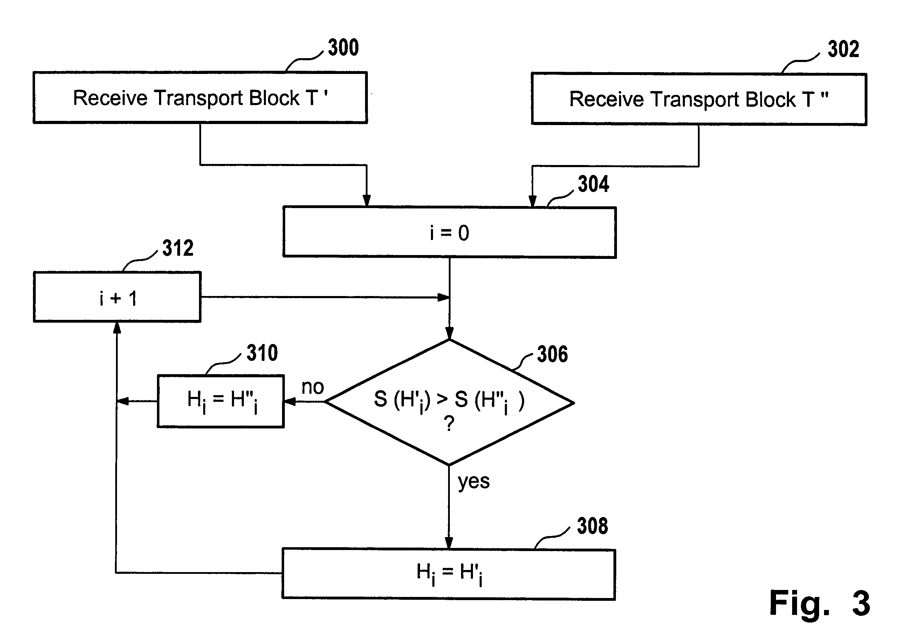

When transport blocks T' and T" are received by radio network controller 100 over links 120 and 122, respectively, the transport blocks T' and T" are processed by program module 102. Depending on the respective quality measures program module 102 selects hard bit H'ᵢ or hard bit H"ᵢ for the consolidated transport block T. This combination procedure is explained in further detail by making reference to the flow chart of figure 3:

in step 300 the transport block T' is received by the radio network controller. In parallel transport block T" is received in step 302 by radio network controller 100. This invokes the program module of radio network controller which performs the macro-diversity combination.

First the index i is set to 0 in step 304. In step 306 it is checked if S(H'ᵢ) > S(H"ᵢ). If this is the case the hard bit Hᵢ of the consolidated transport block T is set to the higher quality hard bit of the two transport blocks T' and T" at bit position i which is H'ᵢ. This is done in step 308.

If the contrary is the case the hard bit Hᵢ is set to H"ᵢ in step 310. Next the index i is incremented in step 312 and the control goes back to 306. This process is performed for each bit position i of the hard bits. The result is the consolidated transport block T which can be forwarded to a user device from the radio network controller.

In addition the overall quality measure QE of the transport blocks T' and T" contained in the FP data frames (cf. FP data frame 116 and 118 of figure 1) can be taken into consideration for the combination process. For example if S(H'ᵢ) = S(H"ᵢ) the hard bit coming from a transport block T' or T" having the higher overall quality QE is selected and assigned to Hᵢ. In other words, if the individual quality measures at a given bit position i are the same the hard bit coming from a transport block having a higher overall quality measure prevails in the selection process.

Preferably bit-by-bit reliability indicators are only inserted into those transport blocks inside an FP data frame which have "bad" CRCls. This further reduces the amount of data overhead which is transmitted over links 120 and 122.

Preferably CRC bits are kept attached to those transport blocks inside an FP data frame which have bit- by-bit reliability indicators inserted. This enables the radio network controller to verify whether the combining was successful to generate an error-free block.

in case the macro diversity system includes at least three signal flows between base stations and a radio network controller, a bit-by-bit combining is possible by using majority decision between hard bits. Thus in such a constellation bit-by-bit reliability indicators may be omitted. In order to enable the radio network controller to verify whether the combining was successful to generate an error-free block, preferably CRC bits are kept attached to the transport blocks inside an FP data frame.

Additionally, in order to limit the amount of data overhead which is transmitted over links 120 and 122, preferably CRC bits are kept attached to those transport blocks inside an FP data frame which have "bad" CRCls.ln order to enable the radio network controller to detect the CRCls and the variable transport block sizes easily when applying enhanced macro-diversity combining in accordance with the present invention, it is advantageous that the CRCls are at a fixed position before the transport blocks.

### List of Reference Numerals

- 100: Radio Network Controller (RNC)
- 102: program module
- 104: base station
- 106: base station
- 108: program module
- 110: program module
- 112: mobile radio links
- 114: mobile station
- 116: FP data frame
- 118: FP data frame
- 120: link
- 122: link

## Claims

1. An uplink macro diversity method in a digital cellular mobile radio communication system, the method comprising the steps of:
- transmitting an information block from a mobile station, the information block having a number of data bits,
- receiving a first information block corresponding to the information block at the first base station and receiving a second information block corresponding to the information block at at least a second base station,
- determining a first quality measure for each data bit of the first information block by the first base station, the first quality measure representing the reliability of the data bit,
- determining a second quality measure for each data bit of the second information block by the second base station, the second quality measure representing the reliability of the data bit,
- sending of the first information block and the first quality measures from the first base station to a controller and sending of the second information block and the second quality measures from the second base station to the controller,
- combining of the first and second information blocks based on the first and second quality measures into a third information block by the controller.

2. The method of claim 1, the controller selecting a data bit from the first information block, if the first quality measure of the data bit is above the second quality measure of the data bit.

3. The method of claim 1, further comprising:
- determining a first overall quality measure for the first information block by the first base station, the first overall quality measure representing the reliability of the first information block, determining a second overall quality measure for the second information block by the second base station, the second overall quality measure representing the reliability of the second information block,
- sending of the first and second overall quality measures to the controller,
whereby the first and second overall quality measures are used for selecting a data bit from the first and second information blocks for a data bit position in the third information block if the corresponding first and second quality measures are equal and the corresponding data bits of the first and second information blocks are different.

4. The method of claim 1, whereby the controller is a radio network controller, and further comprising sending of the third information block to a user device.

5. The method of claim 1, whereby the combining in the radio network controller involves more than two information blocks coming from an arbitrary number of base stations.

6. The method of claim 1, whereby a transport block is sent from a base station to a radio controller as data bits in case the transport block is estimated to be error free by the base station, while it is sent as data bits with quality measures for each data bit in case the transport block is estimated to be erroneous.

7. The method of claim 1, whereby redundancy bits (e.g. CRC) being attached to a transport block, enabling the estimation whether the transport block is error-free or erroneous after combining, are kept attached when a transport block is sent from a base station to a radio controller as data bits with quality measures for each data bit.

8. The method of claim 7, whereby no quality measures for each data bit are included in the transport block, enabling the estimation whether the transport block is error-free or erroneous after e.g. majority-decision combining;

9. A computer program product for a base station of a digital cellular mobile radio communication system, the computer program product comprising program means for performing the steps of:
- determining a quality measure for each data bit of an information block received by the base station, the quality measure representing the reliability of the data bit,
- sending of the information block and the quality measures for the data bits from the base station to a controller.

10. A computer program product for a radio network controller of a digital cellular mobile radio communication system, the radio network controller covering at least first and second base stations, the radio network controller comprising:
- receiving of a first information block corresponding to an information block of a mobile station from a first base station together with first quality measures for each data bit of the first information block, one of the first quality measures representing the reliability of one of the data bits, receiving of a second information block corresponding to the information block of the mobile station from a second base station together with second quality measures for each data bit of the second information block, one of the second quality measures representing the reliability of one of the data bits,
- combining of the first and second information blocks based on the first and second quality measures into a third information block.

11. A base station of a digital cellular mobile radio communication system, the base station comprising:
- means (108) for receiving a first information block from a mobile station (114),
- means ( 110) for determining a first quality measure for each data bit of the first information block, the first quality measure representing the reliability of the data bit,
- means for sending of the first information block and the first quality measures to a controller.

12. The base station of claim 11, further comprising means for determining an overall quality measure for the first information block, the overall quality measure representing the reliability of the first information block, and means for sending of the quality measure to the controller

13. A radio network controller for a digital cellular mobile communication system, the radio network controller covering at least first and second base stations (104, 106), the radio network controller comprising:
- means for receiving of a first information block and first quality measures from the first base station and for receiving of a second information block and second quality measures from the second base station, whereby the first information block correspondings to an information block received by a first base station and the second information block correspondings to the information block received by at least a second base station, the first quality measure for each data bit of the first information block representing the reliability of the data bit in the first information block and the second quality measure for each data bit of the second information block representing the reliability of the data bit in the second information block, and
- means for combining of the first and second information blocks based on the first and second quality measures into a third information block.

14. The radio network controller of claim 13, further comprising means for selecting a data bit from the first and second information blocks for a data bit position in the third information block based on first and second overall quality measures if the corresponding first and second quality measures are approximately equal and the corresponding data bits of the first and second information blocks are different.

15. A data frame structure used in a digital cellular mobile radio communication system, the structure containing among other items the following in the order given, but not necessarily contiguously:
- error indicators for the transport blocks in the data frame,
- the transport blocks in fields with variable size, the size of each transport block being dependent on the error indicator related to the respective transport block.
